(19) **Europäisches Patentamt**

**European Patent Office**

**Office européen des brevets**

(11) **EP 0 549 295 B1**

(12) **EUROPEAN PATENT SPECIFICATION**

(45) Date of publication and mention
of the grant of the patent:
**12.06.1996 Bulletin 1996/24**

(51) Int. Cl.⁶: $A47F\ 3/04$, $G01K\ 3/02$, $G01K\ 3/06$, $G01K\ 3/14$, $G01K\ 15/00$

(21) Application number: **92311635.4**

(22) Date of filing: **21.12.1992**

(54) **Calibration of temperature monitoring apparatus**

Eichung eines Temperaturüberwachungsgerät

Etalonnage d'un appareil de contrôle de la température

(84) Designated Contracting States:
**AT BE CH DE DK ES FR GB GR IE IT LI LU MC NL PT SE**

(30) Priority: **21.12.1991 GB 9127194**

(43) Date of publication of application:
**30.06.1993 Bulletin 1993/26**

(73) Proprietor: **R D TECHNOLOGY LTD**
**Abingdon, Oxon OX14 4RU (GB)**

(72) Inventors:
• **Amor, Christopher Michael John**
**Swindon, Wiltshire (GB)**
• **Darnell, Royston**
**Cumnor Hill, Oxfordshire (GB)**

(74) Representative: **Kensett, John Hinton**
**Saunders & Dolleymore,**
**9 Rickmansworth Road**
**Watford, Hertfordshire WD1 7HE (GB)**

(56) References cited:
**DE-A- 3 145 333**　　　　　**GB-A- 2 167 579**

• KOUDE MAGAZINE vol. 3, no. 10, October 1991, ZEIST NL pages 16 - 21 , XP232519 R.G. MCGUIRE 'ERVARINGEN MET MICROPROCESSORTECHNOLOGIE BIJ KOELINSTALLATIES VOOR SUPERMARKTEN'
• OIL AND GAS JOURNAL vol. 86, no. 40, 3 October 1988, TULSA US pages 65 - 68, XP21877 S.SIVARAMAN E.A. 'CORRELATIONS PREDICTS TANK-SHELL TEMPERATURE'

EP 0 549 295 B1

## Description

This invention relates to the calibration of a monitoring apparatus. In particular, it relates to the calibration of apparatus for monitoring the temperature of food storage containers such as refrigerators or chilled cabinets for the storage or display of food at a manufacturing, wholesale or retail outlet or during the distribution stage. It is also applicable to temperature monitoring of hot food.

The storage and display of food for retail is governed, in the EEC, by various regulations. These regulations stipulate, inter alia, the maximum or minimum temperatures at which various foodstuffs or food products must be stored or displayed to ensure the food remains fit to eat by the consumer. For instance, the regulations stipulate that in the UK after the 1st April 1993 smoked or cured fish, whether whole or cut (sliced) after smoking or curing, such as smoked salmon, is stored at a maximum temperature of 5°C. The regulations stipulate that the temperature must be regularly checked.

In chilled cabinets or display cabinets it is generally impractical to directly measure product temperature since this will usually involve destruction of the product, the temperature of which is being measured. It is also usually inconvenient to measure a temperature directly within the cabinet since a sensor will be intrusive and since the food products are continually moved around and also subject to temperature variations by opening of doors for example or by the necessary defrost cycle in each cabinet. A method of determining temperature is to measure, over a period of time, the air-on and air-off temperatures (as defined below) and to obtain a calculated product temperature (CPT) using a function of these. In practice, the CPT, assuming the mathematics are correct, is found to be a good representation of product temperature within the cabinet at any time.

A chiller cabinet includes an evaporator in which a refrigerant liquid is evaporated and which cools air in its proximity. By continually sampling the air-on temperature, that is the temperature of the return air before it reaches the evaporator, and the air-off temperature, that is the temperature of the air after cooling by the evaporator, an estimate of the actual temperature of the products within the cabinet can be obtained. Clearly, the actual temperature will normally lie between the air-on and air-off temperatures. Methods for calculating the product temperature from air-on and air-off measurements are well known. One known apparatus for continuously receiving air-on and air-off samples and for calculating a product temperature therefrom displaying such information graphically is known as the Woodley System 5 temperature monitoring and control apparatus, manufactured by Woodley Electronics, 43 Milton Park, Abingdon, Oxon, UK.

The sensors for measuring air-on and air-off temperatures are generally permanently fitted to the cabinet during manufacture of the cabinet.

The present invention arose in an attempt to provide a calibration apparatus and technique for use with such temperature monitoring apparatus.

According to the present invention there is provided temperature monitoring apparatus, comprising means for measuring and storing parameters affecting the temperature of a food storage or display means over a period of time; means for calculating an estimated product temperature from said parameters, and means for periodically calibrating the monitoring apparatus, the calibrating means comprising a temperature measuring means adapted to directly measure in-product or between products temperature and to store said measurements over a period of time, means for comparing the directly measured temperature over said period of time with the estimated temperature, and means for correcting the estimated temperature to more closely correspond with the actual temperature and for using the corrected temperature to calibrate the apparatus.

According to the present invention in a further aspect there is provided a method for calibrating apparatus which monitors the temperature within a temperature controlled food storage or display means by comparing at least two parameters upon which the temperature depends to obtain calculated product temperatures, which calibration method comprises measuring said parameters over a pre-determined period of time and storing said parameters and/or a calculated product temperature (CPT) based thereon, simultaneously directly measuring the temperature within the temperature controlled zone, comparing said calculated and actual temperature measurements, and correcting the algorithm used for calculating the C.P.T. measurement to more closely correspond with the actual temperature.

The food storage or display means may be a refrigerator or chiller, a freezer, or an apparatus adapted to heat food or maintain the temperature of heated food.

The parameters are preferably at least two of air-on, air-off and ambient temperatures. Any other parameters which directly or indirectly affect the temperatures within the storage means, such as humidity, may alternatively or additionally be used.

Preferably, the direct temperature is measured by a means such as the Temptimem (registered trade mark) temperature logger of Woodley Electronics.
Alternatively, a sensor may be used to measure actual product temperature and to transmit the data to an external, remote, logger, such as a computer. The transmission may be by wire or optical connection or may be wireless, such as radio, infra-red or microwave link for example.

Since the air temperature sensors are impracticable to calibrate directly and any small drift is insignificant, the calibration technique preferably takes this into account but with safeguards to identify extreme drifts. Therefore, each type of storage or display means has a standard range of outputs associated with its temperature sensors. If this range is exceeded (i.e. a reading is more or less than the allowable range), then an alarm may be activated, indicating that the sensors themselves may be malfunctioning, or otherwise need checking. This could necessitate temporary removal or replacement of a sensor.

According to the present invention, there is further provided temperature monitoring apparatus, or a method of calibrating, comprising any one or more of the novel features disclosed herein.

Embodiments of the invention will now be described by way of example only with reference to the accompanying drawings, in which;

Figure 1 shows a schematic side view of a chill cabinet;
Figure 2 shows a schematic side view of an alternative configuration of a chill cabinet, and;
Figure 3 shows graphical representations of measured and calculated temperatures.

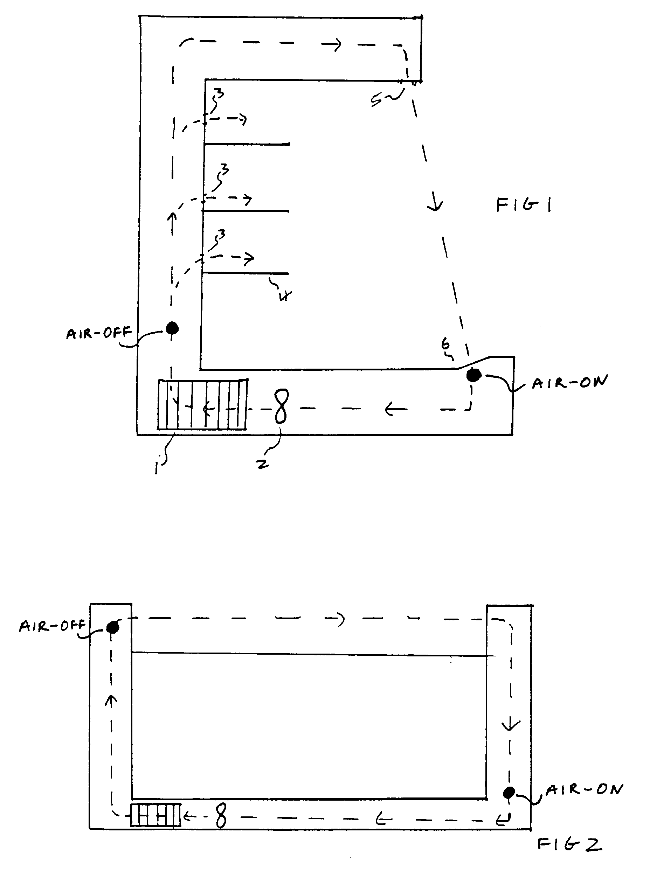

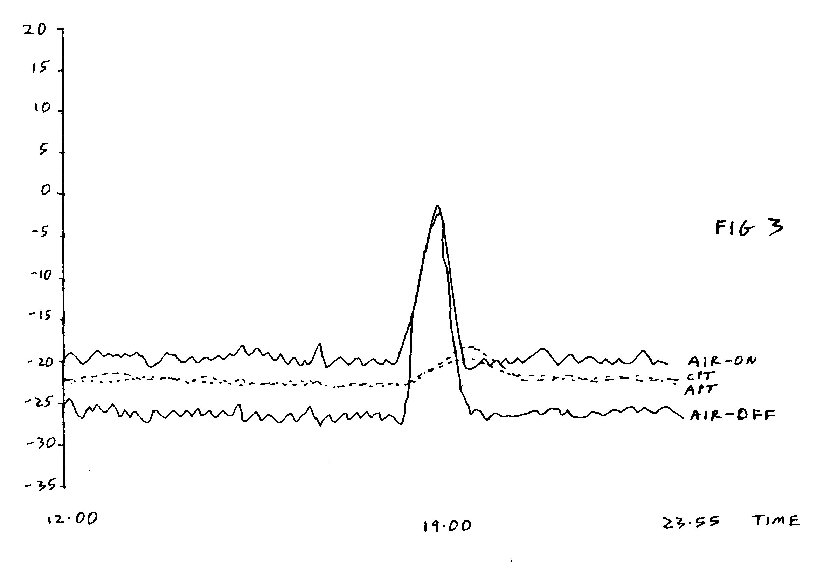

Referring to the figures, figures 1 and 2 show schematically two types of chill cabinets. Figure 1 shows the vertical multi-deck type of cabinet, as would generally be used for the display of chilled foods. The cabinet includes an evaporator (1) which uses a refrigerant fluid in conventional manner to lower the temperature of its surroundings and fans (2) adjacent the evaporator (1), which fans circulated air past the evaporator to cool the air. The cooled air circulates up the rear portion of the cabinet with portions allowed to escape through vents (3) to cool food products on shelves (4). The bulk of the cooled air flows up to the top cabinet and is allowed to descend through a vent (5) to the bottom surface of the cabinet (6). A curtain of cool air is formed along the front face of the cabinet, which helps to maintain displayed products at the required temperature. When descending to form the front air curtain the air tends to be heated due to the higher temperature of the ambient air. This warmer air is circulated to pump (2) from where it is again circulated to evaporator (1), thus completing the cycle. It will be seen from the above analysis that in general the coolest part of the air is at a position directly downstream of the evaporator and the air is at its warmest just upstream thereof. Accordingly, in order to measure air-on and air-off temperatures, temperature sensors are placed at the positions indicated by the legend AIR-ON and AIR-OFF in the figure. The sensors are of any conventional type and are generally built in to the cabinet during manufacture such as they cannot be readily removed. The conventional temperature monitoring system such as the Woodley System 5 receives inputs from the two sensors and continually compares these to derive a CPT value.

Figure 2 shows an alternative cabinet of the well type in which food is displayed on a base and cold air is circulated over this base. Air-off and air-on measurements are taken at appropriate positions as shown in figure 2.

The air-on and air-off temperatures are continually monitored by sampling at a pre-determined rate. This rate may be every five minutes for example although shorter or longer sampling periods may be required. In some instances the sampling frequency may be of the order of once per hour or several hours or once per second or few seconds for example. In one example the rate is once every minute. The values are stored in an apparatus such as the Woodley System 5 and may be graphically displayed in the manner shown in figure 3 which shows a plot of both air-on and air-off temperatures against time. In this example (which is schematic only) sampling is considered to commence at 12 00 and finish at 23.55, although monitoring will of course normally be done twenty four hours a day. It is seen that both the air-on and air-off temperatures vary continuously as temperature conditions and ambient air conditions vary. In particular, at approximately 19.00 a defrost cycle is commenced, causing large peaks in the plot. The defrost cycles are essential in such refrigeration apparatus to prevent icing-up of the apparatus and food products within it.

The apparatus continuously measures within it the air-on and air-off temperatures and uses a function to predict the C.P.T. This is shown in the dashed lines in the figure.

One function, by way of example only, is:

$$CPT = A + B \text{ air-on } (_{T-3}) + C \text{ air-off } (_{T-3}) + D \text{ air-on } (_{T-6}) + E \text{ air-off}(_{T-6})$$

In this algorithm, samples of air-on and air-off temperatures taken 3 and 6 minutes previously are used to calculate the current C.P.T.

The parameters A, B, C, D and E are adjusted as part of the calibration procedure so that the C.P.T. matches the actual product temperature (A.P.T.) as closely as possible.

In a second example, the calculated product temperature is obtained by an algorithm in which first a ratio between the air-on and air-off temperatures is calculated. A degree of damping is then added into the algorithm in which only a proportion of the difference between a sample and preceding sample is added, thus causing large deviations such as that of the defrost cycle to be catered for so as not to interfere significantly with the calculated product temperature, as shown in the plot. In one example, the new calculated temperature $T_n$ = last calculated temperature

$$T_1 + \frac{\Delta t}{x}$$

where $\Delta t$ = difference between current and last value, and x = variable dependent upon sampling rate and thermal inertia of the produce within the container.

Clearly, with either embodiment, if the peak value obtained at 1900 were to be kept for a longer period then the CPT would eventually begin to rise to match it.

Periodically, when calibration is considered to be required, which will typically be at six-monthly intervals, a temperature sensor, such as the Temptimem temperature logger is inserted into the cabinet to directly measure between-products temperatures. A logger of this type stores measured values over a period of time. This period of time may be twelve hours or any other period of time. Instead of the logger, any convenient direct temperature measurement technique may be used. This could even be a manual recording of the temperature over a period of time by inserting a thermometer or other temperature measuring means between the products and by manually recording the temperature and the pre-determined sampling rate.

An alternative is to place sensors inside the cabinet which are associated with means for transmitting temperature or other data to a remote storage means, such as a computer. This may be by a physical, e.g.wire, link or a wireless link.

Once the samples over that period of time have been obtained and stored, they are fed into the Woodley 5 apparatus in which the air-on and air-off temperatures have been stored. With the Temptimem logger system, the logger is inductively coupled in known manner to its reader which is connected directly to the computer system in which the air-on and air-off temperature measurements are stored. One example of the logger is capable of holding a maximum of 13,500 measurements which can be transferred into the computer. The actual products temperature (APT) measurements are then compared with the calculated products temperature (CPT) measurements. This is shown in figure 3, where the APT samples are shown as a dotted line. The CPT and APT measurements are then compared and the algorithm for calculating the CPT is then adjusted or modified to take into account the actual product temperature. The measured values of air-on, air-off, CPT and APT are used to calculated the parameter for the function using linear regression, for example. The modified parameters are used in the algorithms until calibration is next carried out, which may be six months later.

The apparatus most preferably includes a timer which alerts a user when calibration is required, ie every six months for example.

In an alternative embodiment,

$$\text{ratio for CPT} = \frac{\text{Mean Actual Temp - Mean Air-off Temp}}{\text{Mean air-on Temp - Mean Air-off Temp}}$$

## Claims

1. Temperature monitoring apparatus comprising means for measuring and storing parameters affecting the temperature of a food storage or display means over a period of time and; means for calculating an estimated product temperature from said parameters, said apparatus being characterized in that it further comprises means for periodically calibrating the monitoring apparatus, the calibrating means comprising a temperature measuring means to directly measure in-product or between products temperature and to store said measurements over a period of time, means for comparing the directly measure temperature over said period of time with the estimated temperature and means for correcting the estimated temperature to more closely correspond with the actual temperature and for using the corrected temperature to calibrate the apparatus.

2. Temperature monitoring apparatus as claimed in Claim 1, wherein the parameters affecting the temperature are at least two of air-on, air-off and ambient temperatures.

3. Temperature monitoring apparatus as claimed in Claim 1 or Claim 2, wherein the temperature measuring means comprises a temperature logger placed in or between products in the food storage or display means.

4. Temperature monitoring apparatus as claimed in Claim 1 or Claim 2, wherein the temperature measuring means comprises a sensor and means to transmit signals to a remote logging apparatus.

5. A method for calibrating an apparatus which monitors the temperature within a temperature controlled food storage or display means by comparing at least two parameters upon which the temperature depends to obtain calculated product temperatures, which calibration method comprises measuring said parameters over a predetermined period of time and storing said parameters and/or a calculated product temperature (CPT) based thereon; simultaneously directly measuring the temperature within the temperature controlled zone, comparing said calculated and actual temperature measurements and correcting the algorithm used for calculating the calculated product temperature to more closely correspond to the actual temperature.

6. A method as claimed in Claim 5, wherein the parameters are at least two of air-on, air-off and ambient temperature.

## Patentansprüche

1. Temperaturüberwachungsgerät mit Einrichtung zur Messung und Speicherung von Parametern, die sich auf die Temperatur eines Geräts zur Nahrungsmittelaufbewahrung oder -präsentation (wie z.B. einer Vitrine) während eines Zeitraums auswirken, sowie mit einer Einrichtung zur Berechnung einer anhand der besagten Parameter geschätzten Produkttemperatur, wobei das besagte Gerät dadurch gekennzeichnet ist, daß es darüber hinaus eine Einrichtung zur periodischen Eichung des Überwachungsgeräts aufweist, und wobei die Eichungseinrichtung eine Temperaturmeßeinrichtung zur direkten Messung der Temperatur in bzw. zwischen Produkten und zur Speicherung besagter Messungen während eines Zeitraums aufweist, sowie mit einer Einrichtung zum Vergleich der während des besagten Zeitraums direkt gemessenen Temperatur mit der geschätzten Temperatur und mit einer Einrichtung zur Korrektur der geschätzten Temperatur, um bessere Übereinstimmung mit der tatsächlichen Temperatur zu erzielen, und zur Verwendung der korrigierten Temperatur zur Eichung des Geräts.

2. Temperaturüberwachungsgerät gemäß dem unter Beanspruchung 1 dargelegten Anspruch, wobei es sich bei den die Temperatur beeinflussenden Parametern um mind. zwei der folgenden Parameter handeln muß - Luft 'vor Verdampfer', Luft 'nach Verdampfer' bzw. Raumtemperatur.

3. Temperaturüberwachungsgerät gemäß dem unter Beanspruchung 1 oder 2 dargelegten Anspruch, wobei die Temperaturmeßeinrichtung einen Temperatur-Logger beinhaltet, der entweder in oder zwischen Produkten in dem zur Nahrungsmittelspeicherung oder -präsentation bestimmten Gerät angebracht wird.

4. Temperaturüberwachungsgerät gemäß dem unter Beanspruchung 1 oder 2 dargelegten Anspruch, wobei die Temperaturmeßeinrichtung einen Sensor sowie eine Einrichtung zur Übertragung von Signalen an ein ferngesteuertes Logging-Gerät beinhaltet.

5. Eine Methode zur Eichung eines Geräts zur Überwachung der Temperatur innerhalb eines temperaturgeregelten Geräts zur Nahrungsmittelaufbewahrung oder -präsentation, bei der mindestens zwei der Parameter miteinander verglichen werden, von denen die Temperatur abhängt, um die berechnete Produkttemperatur zu ermitteln, wobei diese Eichungamethode bedeutet, daß die besagten Parameter während eines vorbestimmten Zeitraums gemessen werden und die besagten Parameter und/oder die darauf beruhende, berechnete Produkttemperatur gespeichert werden; wobei gleichzeitig die Temperatur direkt in der temperaturgeregelten Zone gemessen wird, dann die besagten berechneten und tatsächlichen Temperaturmessungen miteinander verglichen werden und der zur Berechnung der berechneten Produkttemperatur verwendete Algorithmus korrigiert wird, um bessere Übereinstimmung mit der tatsächlichen Temperatur zu erzielen.

6. Eine Methode gemäß dem unter Beanspruchung 5 dargelegten Anspruch, wobei es sich bei den Parametern mind. um zwei der folgenden handeln muß - Luft 'vor Verdampfer', Luft 'nach Verdampfer' bzw. Raumtemperatur.

## Revendications

1. Appareil de contrôle de température comprenant un dispositif pour mesurer et emmagasiner des paramètres affectant la température d'un dispositif pour l'entreposage ou l'étalage d'aliments pendant une période de temps et un dispositif pour calculer une température évaluée pour un produit à partir desdits paramètres, ledit appareil étant **caractérisé par le fait qu'**il comprend de surcroît un dispositif pour rectifier périodiquement l'appareil de contrôle, le dispositif de rectification comprenant un dispositif de mesure de la température pour mesurer directement la temperature dans le produit ou entre les produits et pour emmagasiner lesdites valeurs mesurées pendant une période de temps, un dispositif pour comparer la temperature mesurée directement pendant ladite période de temps avec la température évaluée et un dispositif pour corriger la température évaluée de façon à l'aligner plus exactement sur la température réelle et pour utiliser la température corrigée pour rectifier l'appareil.

2. Appareil de contrôle de température tel que décrit dans la revendication 1, dans lequel les paramètres affectant la température sont d'au moins deux pour les températures lors de l'entrée d'air, de la coupure d'air et pour les températures ambiantes.

3. Appareil de contrôle de température tel que décrit dans les revendications 1 et 2, dans lequel le dispositif pour mesurer la température comprend un enregistreur de température placé dans ou entre les produits dans le dispositif d'entreposage ou d'étalage d'aliments.

4. Appareil de contrôle de température tel que décrit dans les revendications 1 ou 2, dans lequel le dispositif pour mesurer la température comprend un senseur et un dispositif pour transmettre des signaux vers un appareil enregistreur à distance.

5. Méthode pour rectifier un appareil contrôlant la température a l'intérieur d'un dispositif d'entreposage ou d'étalage d'aliments au moyen d'une comparaison d'au moins deux paramètres dont dépend la température pour obtenir des températures calculées des produits, laquelle méthode de rectification consiste à mesurer lesdits paramètres sur une période déterminée au préalable et à emmagasiner lesdits paramètres et/ou une température calculée du produit (TCP) basée sur eux; en même temps mesurant directement la température à l'intérieur de la zone à température contrôlée, comparant lesdites mesures de températures calculée et réelle et corrigeant l'algorithme utilisé pour calculer la température calculée du produit pour l'aligner plus exactement sur la température réelle.

6. Méthode selon la revendication 5, dans laquelle les paramètres sont d'au moins deux pour les températures lors de l'entrée d'air, de la coupure d'air et de la température ambiante.

FIG 1

FIG 2

FIG 3

EP 0 549 295 B1